# EUROPEAN PATENT SPECIFICATION

(11) **EP 2 721 321 B1**
(45) Date of publication and mention of the grant of the patent: **20.04.2016**
(21) Application number: 12725037.1
(22) Date of filing: 01.06.2012
(51) Int. Cl.: F16H 47/04, F16H 3/72

(54) **VEHICLE TRANSMISSION AND CORRESPONDING CONTROL METHOD**
FAHRZEUGGETRIEBE UND ENTSPRECHENDES STEUERVERFAHREN
TRANSMISSION DE VÉHICULE ET PROCÉDÉ DE COMMANDE CORRESPONDANT

(30) Priority: 14.06.2011 GB 201109968
(43) Date of publication of application: 23.04.2014
(73) Proprietor: Valtra Oy Ab, 44201 Suolahti (FI)
(72) Inventor: RINTOO, Mikko, FIN-40270 Palokka (FI)
(74) Representative: AGCO Intellectual Property Department
(86) International application number: PCT/EP2012/060387
(87) International publication number: WO 2012/171813

(56) References cited:
- DE-A1- 19 627 407
- DE-C1- 3 925 732
- DE-C1- 4 236 671
- US-A1- 2006 276 291

## Description

The invention relates to vehicle transmissions and particularly to direct shift (or DSG) transmissions that include a plurality of clutches which are alternatively engaged to convey torque from a primary motor to a differential gear via respective torque transfer paths.

Direct shift (or dual clutch) transmissions are well known in the automotive industry. European Patent application EP-1,541,898 discloses a dual clutch transmission for an agricultural tractor. Further examples of known vehicle transmissions can be seen in the publications DE4236671C1, which discloses a vehicle transmission according to the preamble of claim 1, US2006/276291 A1, DE19627407A1, DE3925732C1.

It is an object of the invention to provide a direct shift transmission with improved functionality.

According to the invention there is provided a vehicle transmission as described in claim 1. Advantageously, the provision of a torque transfer path with a non-mechanical drive facilitates a standstill mode. In the preferred embodiment of the non-mechanical drive being hydrostatic and comprising a hydraulic pump and motor, a pure hydrostatic transmission stage can be provided.

In a hydrostatic transmission stage (first torque transfer path) the vehicle drive speed can be controlled by the angle of the pump (when of the swashplate type) wherein the vehicle can go forwards or backwards without any mechanical transmission change. This delivers a very safe mode in which the driver can reverse direction without operating a mechanical power shuttle and is ideally suited to low speed operations (< 15 kph).

For higher speeds the transmission can transfer torque via the second torque transfer path. The torque transfer sub-paths selected by the synchromesh units offer a selection of gear ratios which can be augmented by appropriate operation of the continuously variable drive connection.

Although a hydrostatic drive connection is preferred, it is envisaged that this may be replaced with a continuously variable electric drive connection having an electric generator and motor.

It should be understood that the term 'non-mechanical' drive connection is intended to encompass means of transferring power from an input to an output without a continuous mechanical coupling therebetween. For example, the transfer of power may be hydraulic (using pressurised fluid) or electrical (using electrical power).

According to the invention the transmission further comprises first and second shafts, each of which is hollow and forms part of the first and second main torque transfer paths respectively, and a third shaft which is in a direct driving relationship with the differential gear and passes through the first and second shafts, each of the first and second shafts being connectable to the third shaft via said plurality of alternative torque transfer sub-paths.

The transmission may further comprise a fourth shaft which is parallel to, and in driving engagement with, the third shaft, each synchromesh unit being associated with a respective one of the first and second shafts and being moveable between a first position corresponding to a first torque transfer sub-path in which the associated first or second shaft is drivingly connected to the third shaft via the fourth shaft, a second position corresponding to a second torque transfer sub-path in which the associated first or second shaft is rendered integral with the third shaft, and a third position in which the associated first or second shaft is drivingly disconnected from the third shaft.

Preferably the transmission is a continuously variable power-split transmission further comprising an epicyclic module having first and second epicyclic inputs and one epicyclic output, the first epicyclic input being connectable to said driven input, the non-mechanical drive connection being between the first and second epicyclic inputs, wherein the second main torque transfer path is via the epicyclic module. The epicyclic module preferably comprises first and second epicyclic outputs, the second main torque transfer path being via the first epicyclic output, the transmission further comprising a third main torque transfer path between the driven input and the differential gear, via the second epicyclic output, the third torque transfer path comprising a respective in-line clutch and sharing the synchromesh unit and plurality of alternative torque transfer sub-paths with said first main torque transfer path. In this embodiment, the transmission comprises three main torque transfer paths: one via the continuously variable drive connection, and two via the two epicyclic outputs. The shared synchromesh unit is driven via either the continuously variable drive connection or the second epicyclic output depending upon the position of the associated in-line clutches.

The vehicle can, therefore, start from a standstill using a first transmission stage wherein the transferred torque bypasses the epicyclic output, that is the non-mechanical route. When desired, perhaps at a given speed, the transmission may 'up-shift' upon command to a power-split stage in which the transferred torque is routed to the same synchromesh unit but via the epicyclic module.

The epicyclic module preferably comprises three compound planetary gear sets supported on a planet carrier, each planetary gear set engaging respective sun gears, a first sun gear being integral with a first epicyclic input shaft forming the first epicyclic input, a second and a third sun gear being integral with respective epicyclic output shafts forming the first and second epicyclic outputs. The two epicyclic output shafts are preferably mutually coaxial. Furthermore, the planet carrier may form said second epicyclic input.

Preferably, the in-line clutches of both the first and third torque transfer paths alternatively engage a common shaft.

The in-line clutches are preferably disposed upstream of the associated synchromesh unit within the respective main torque transfer path.

In a preferred embodiment the transmission further comprises a forward-reverse transmission module comprising an input shaft coupled to said driven input, an output shaft, first and second reverser clutches which are alternatively engageable to close respective forward and reverse drive paths between the input shaft and output shaft, wherein engagement of the first reverser clutch couples the input shaft directly to the output shaft, and engagement of the second reverser clutch couples the input shaft to the output shaft via first and second gear sets which each comprise a plurality of meshed gears, one of said gear sets comprising an odd number of gears and the other of said gear sets comprising an even number of gears.

There is also provided a method of controlling a transmission as described above, wherein each of said synchromesh units, the input-to-output speed ratio of said non-mechanical drive connection, and the in-line clutches are controllable by a control unit, the method comprising commanding selectively between a first mode in which torque is transferred via the first main torque transfer path, and a second mode in which torque is transferred via the second main torque transfer path, the in-line clutches of the first and second main torque transfer paths being alternately closed to select between the first and second modes.

Further advantages of the invention will become apparent from reading the following description of specific embodiments with the reference to the appended drawings in which:
Figure 1 shows diagrammatically the layout of a vehicle transmission in accordance with an embodiment of the invention;
Figure 2 shows a plot of pump angles v. drive speed (at a constant engine speed) for the various transmission stages available; and,
Figure 3 shows a tabular summary of the torque transfer paths for each transmission stage.

The present invention is susceptible of embodiments of many different forms. While the drawings illustrate, and the specification describes, certain preferred embodiments of the invention, it is to be understood that such disclosure is by way of example only. There is no intent to limit the principles of the present invention to the particular disclosed embodiments.

### Construction

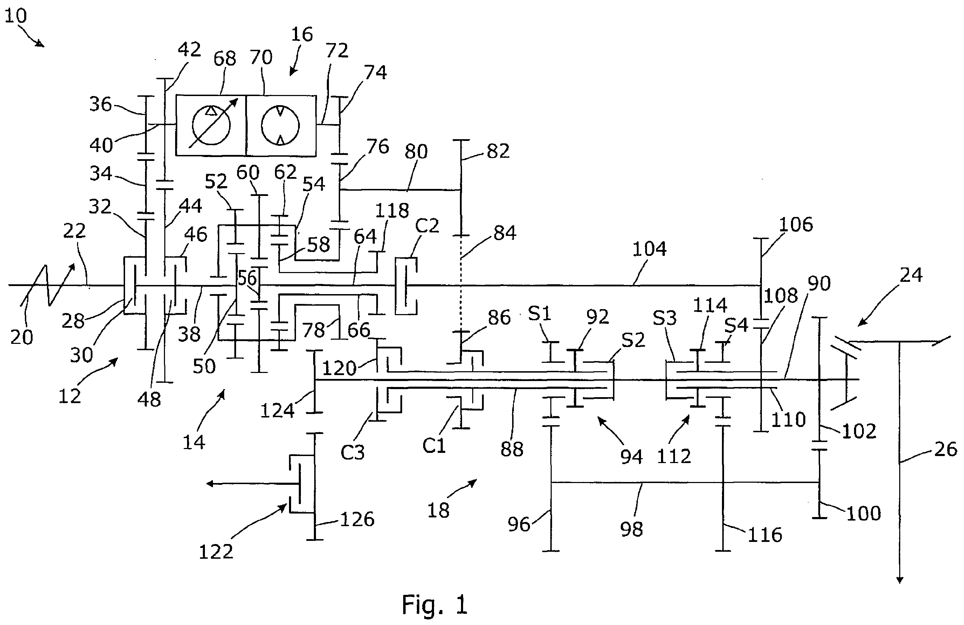

With reference to Figure 1, an agricultural tractor transmission 10 is shown diagrammatically. The transmission 10 includes a forward-reverse transmission module 12, and epicyclic module 14, a hydrostatic drive branch 16 and a direct shift transmission (DSG) module 18. The inter-relationship between these components will be described in the following passages. At its input end, transmission 10 is coupled to an internal combustion engine 20 which generates torque via a driveshaft 22 which is transferred via transmission 10 to a differential gearing 24. The invention is not limited to vehicles with internal combustion engines and other sources of torque such as electric motors may instead be employed. The differential gear 24 serves to distribute the transmitted torque to a rear axle of the agricultural tractor represented at 26.

Driveshaft 22 is integral with an input shaft of the forward-reverse transmission module 12 and is also integral with an input side 28 of forward clutch 30 and first gear 32 in a first gear set 32, 34, 36 to be described in more detail below. Forward clutch 30 is closed to render driveshaft 22 integral with shaft 38 which forms a first epicyclic input.

Third gear 36 of the first gear set 32, 34, 36 is keyed to a shaft 40 which provides an input side to hydrostatic power branch 16 to be described below. A further gear 42 is keyed to shaft 40 and provides a first gear in a second gear set 42, 44. Gear 44 idles on shaft 38 and is integral with an input side 46 of reverse clutch 48. Closure of reverse clutch 48 completes a mechanical drive connection between driveshaft 22 and epicyclic first input 38 via the first gear train 32, 34, 36 and second gear train 42, 44.

Turning to the epicyclic module 14, first sun gear 50 is keyed to shaft 38 and drives a first set of planetary gears 52 supported by planet carrier 54. Second and third sun gears 56, 58 are each driven by respective planetary gear sets 60, 62 which are coupled to the same planet carrier 54. Second and third sun gears 56, 58 are integral with first and second epicyclic output shafts 64, 66 which are mutually coaxial.

The epicyclic module 14 in this example does not include a ring gear. However, it is envisaged that alternative epicyclic arrangements known in the art may be used instead without deviating from the invention.

Turning to the hydrostatic power branch 16, a variable displacement pump 68 is connected hydraulically to a fixed displacement motor 70 in a known manner. The pump 68 is driven by shaft 40 whilst the motor 70 drives output shaft 72 with integral gear 74 which itself is meshed with gear 76 which, in turn, is meshed with gear 78 being integral with planet carrier 54 which serves as a second epicyclic input. The variable displacement pump 68 may take many forms but is typically provided by an axial piston pump with a variable angle swashplate as in known continuously variable transmissions. The non-mechanical drive connection between pump 68 and motor 70 allows a continuous range of input to output speed ratios between input shaft 40 and output shaft 72 including a zero ratio in which the output speed is zero. The hydrostatic power branch 16 described is similar to that currently available on agricultural tractors branded VALTRA (registered trade mark) including a continuously variable transmission (CVT).

Although a hydrostatic drive connection is provided between shafts 40 and 72 it should be understood that other non-mechanical drive connections may be used instead such as those including an electric generator and an electric motor for example.

Together, the forward reverse transmission module 12, epicyclic module 14 and hydrostatic power branch 16 provide a, potentially standalone, CVT module having two output shafts 64, 66.

In the example shown in Figure 1, a third output is taken from gear 76 in the gear train 74, 76 coupling the hydrostatic power branch output 72 and planet carrier 54. Third output shaft 80 is integral with gear 76. Torque transferred by third output shaft 80 bypasses epicyclic module 14 and the rotational speed is dependant solely on the engine speed and gear ratio conveyed by hydrostatic branch 16. In this example the three outputs provided by shafts 64, 66, 80 serve to power the DSG module 18. However, it should be understood that the CVT having the three outputs described could be employed in other applications.

Turning to the DSG module 18 torque is taken from one of shafts 64, 66, 80 via respective gear trains described below. In a first torque transfer path gear 82 is keyed to shaft 80 and meshed with gear 84 which is, in turn, meshed with gear 86 forming a gear train. Gear 86 idles on first synchromesh shaft 88 which itself is hollow and disposed coaxially with output shaft 90 coupled to differential gear 24. Furthermore, gear 86 is integral with an input side of first clutch C1.

Closure of clutch C1 renders gear 86 integral with first synchromesh shaft 88 which, in turn, is integral with driven synchromesh gear 92 which forms part of first synchromesh unit 94.

First synchromesh unit 94 includes a coupling arrangement (not shown) which renders the driven synchromesh gear 92 with first synchromesh gear S1 or second synchromesh gear S2. Synchromesh arrangements are well known in the field of transmissions and the basic principle will not be described herein.

When first synchromesh gear S1 is engaged torque is transferred from first synchromesh shaft 88 to output shaft 90 via gears S1, 96, shaft 98 and gear train 100,102. Alternatively, when second synchromesh gear S2 is engaged torque is transferred from first synchromesh shaft 88 to output shaft 90 because second synchromesh gear S2 is integral with the latter.

In a second torque transfer path first epicyclic output shaft 64 is rendered integral with shaft 104 by closure of clutch C2. Meshed gears 106, 108 provide a drive connection between shaft 104 and second synchromesh shaft 110. Second synchromesh unit 112, similar to first synchromesh unit 94, includes a driven synchromesh gear 114 integral with second synchromesh shaft 110. In a similar manner to that described before, couplers (not shown) render the driven synchromesh gear 114 integral with either third synchromesh gear S3 or fourth synchromesh gear S4. By selective operation of second synchromesh unit 112, second synchromesh shaft 110 can be drivingly connected to output shaft 90 either directly (via gear S3) or indirectly (via gear S4, 116, shaft 98 and gears 100,102).

In a third torque transfer path second epicyclic output shaft 66 is coupled to input side of third clutch C3 via a pair of gears 118 and 120. Closure of clutch C3 provides a drive path between second epicyclic output 66 and first synchromesh shaft 88. The torque transfer sub-paths (to be described below) provided by first synchromesh unit 94 complete the torque transfer path to the output shaft 90 and thus differential gear 24.

The clutches involved, that is forward clutch 30, reverse clutch 48 and first, second, third clutch C1, C2, C3 are of the wet multi-disc type and are each hydraulically actuated to allow electro-hydraulic control from an electronic control unit

(not shown). However it will be understood that other types of clutches can instead be utilised.

From reading the above description it will be become apparent that the transmission 10 provides three main torque transfer paths between the engine 20 and differential gear 24. In a first torque transfer path power is conveyed via the hydrostatic power branch 16, first clutch C1 and first synchromesh unit 94, thereby providing a hydrostatic drive path including an in-line non-mechanical drive connection. In a second torque transfer path power is conveyed via the power split arrangement of the epicyclic unit 14 and power branch 16, second clutch C2 and second synchromesh unit 112. In a third torque transfer path power is transmitted via the power split arrangement 14, 16, third clutch C3 and first synchromesh unit 94.

For each of the aforementioned torque transfer paths two torque transfer sub-paths are available and selectable by the associated synchromesh units 94, 112. This provides *five* practical paths to transmit torque from the engine 20 to differential unit 24. It should be appreciated that a sixth path via clutches C1 and S2 is possible but not preferred.

Also provided is a four-wheel drive clutch 122, the input side of which is driven by a pair of gears 124, 126 driven by output shaft 90. It should be understood that four-wheel drive clutch 122 permits selective engagement of a four-wheel drive mode in which the front wheels of the vehicle are also provided with power for additional traction.

### Operation

### Transmission Stages

In the following passages the various operational modes will be described with reference to the forward direction of travel. A separate description of the reverse mode will be given thereafter.

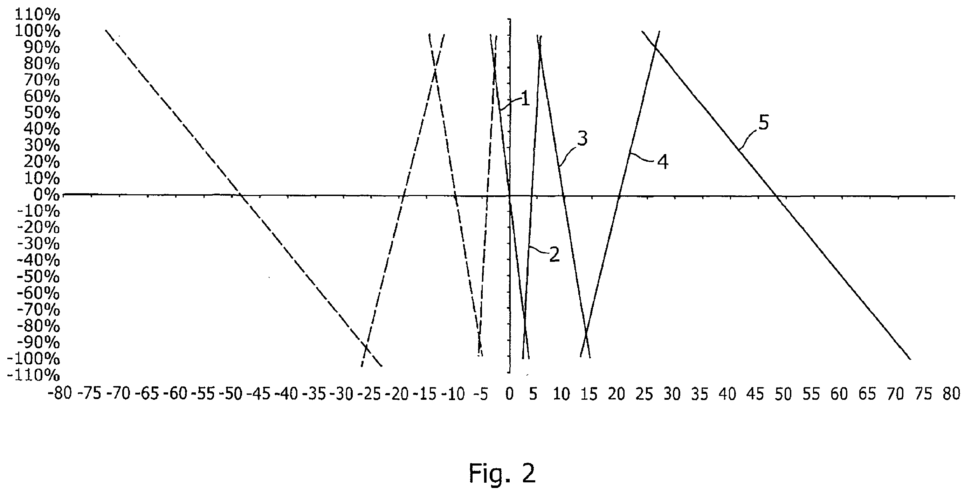

In a first transmission stage, or hydrostatic mode, neither the forward nor reverse clutches 30, 48 need be closed to deliver torque from the engine 20 to the differential gear 24. First clutch C1 is closed and first synchromesh gear S1 is engaged. The forward speed of the vehicle is controlled therefore by the engine output speed at driveshaft 22 and the variable ratio provided by hydrostatic power branch 16. Line 1 plotted on Figure 2 shows the correlation of forward speed (horizontal axis) of the vehicle at a constant engine speed in the first transmission stage with varying angles (vertical axis) of the swashplate in the pump 68. It can be seen that this hydrostatic mode can deliver a standstill (zero speed) as is available in some infinitely variable transmissions. Assuming a steady engine speed, a decrease in the swashplate angle from 0% results in stepless change in forward speed ratio. At these low speed ratios in the hydrostatic mode maximum drawbar force is available due to the torque transfer path bypassing the mechanical gearings of the epicyclic module 14 and instead passing via the mechanical drive connection 74, 76, 82,84,86.

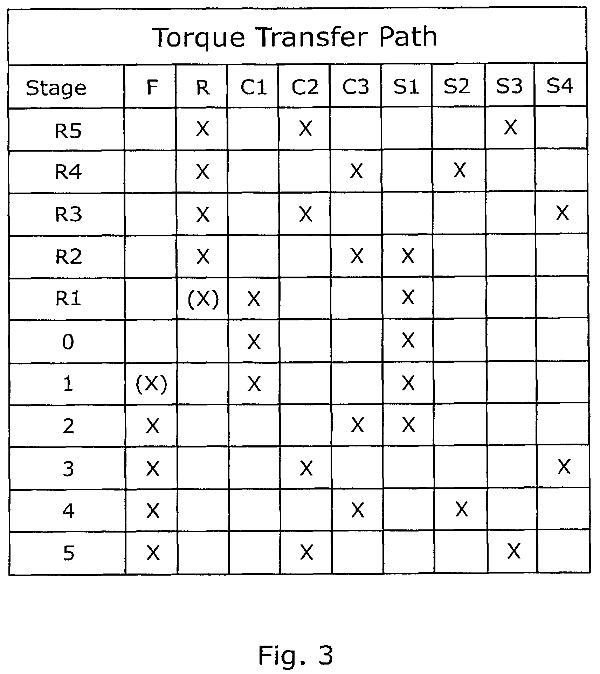

When in transmission Stage 0 or 1 (see Figure 3), both the forward and reverse clutches 30, 48 may be open due to the permanent drive connection to the hydrostatic branch 16 via gear train 32, 34, 36. Second and third clutches C2 and C3 are open which allows the forward clutch 30 to be closed under low load in preparation for a shift to transmission Stage 2.

Line 2 on Figure 2 is representative of transmission Stage 2 in which torque is transferred via third clutch C3 and first synchromesh gear S1. When increasing the forward speed ratio by reducing the swashplate angle (as described above in relation to the hydrostatic mode) the input and output sides of third clutch C3 become equal at a given angle which corresponds to the intersection of lines 1 and 2 in Figure 2. At this point the transmission can change from Stage 1 to Stage 2 by simultaneously opening first clutch C1 and closing third clutch C3. Provided the input and output sides of third clutch C3 are equalised there will be no noticeable jump in transmission ratio thereby providing continuous traction and improved comfort for the driver.

In transmission Stage 2 torque is transferred from the engine 20 to the differential 24 via the power split arrangement of epicyclic module 14 and power branch 16, third clutch C3 and first synchromesh gear S1. At constant engine revs, the drive speed is further increased by increasing the swashplate angle as illustrated by line 2 in Figure 2. During acceleration second synchromesh unit 112, under no load at this stage, engages fourth synchromesh gear S4 in anticipation of the next change in transmission stage. It should be understood that the engagement of fourth synchromesh gear S4 can be executed earlier instead.

At (or near) maximum swashplate angle in transmission Stage 2, the input side and output side of second clutch C2 become equalised in terms of rotational speed. This point is represented by the intersection of lines 2 and 3 on Figure 2 and represents the point during acceleration at which the transmission can switch from Stage 2 to Stage 3 in a seamless manner. At this point third clutch C3 is opened at the same time as second clutch C2 is closed. Torque is then transferred from the engine 20 to the differential gear 24 via clutch C2 and fourth synchromesh gear S4.

Further acceleration is enabled by a decrease in swashplate angle from maximum to minimum as represented by line 3 in Figure 2. During acceleration in transmission Stage 3 the first synchromesh unit 94, under no load at this stage, engages second synchromesh gear S2 in preparation of the anticipated change in transmission stage.

At (or near) minimum swashplate angle in transmission Stage 3 represented by the crossover of lines 3 and 4 in Figure 2, the input and output sides of third clutch C3 become equalised. At this point, assuming further acceleration is required, clutch C3 is closed at the same time as clutch C2 is opened thereby switching the transfer of torque back to the first synchromesh unit 94.

An increase in transmission ratio in transmission Stage 4 is enabled by an increase in the swashplate angle from minimum to maximum as represented by line 4 in Figure 2. During this acceleration stage second synchromesh unit 112 engages third synchromesh gear S3 in preparation in the anticipated up-shift in transmission stage.

At (or near) maximum pump angle in transmission Stage 4, the input and output sides of the second clutch C2 equalise in terms of speed. At this point, represented by the crossover of lines 4 and 5 in Figure 2 an up-shift in transmission stage is executed by simultaneously closing second clutch C2 and opening third clutch C3. This provides the highest transmission stage (Stage 5) in which further acceleration up to the maximum available ratio is carried out by a decrease in swashplate angle as represented by line 5 in Figure 2.

It should be understood that Figure 2 represents the input-to-output ratio of the overall transmission 10 and the horizontal axis can only represent forward speed at a steady engine speed. In normal operation the forward speed of the vehicle will be determined by appropriate adjustment of both the transmission ratio and the engine speed, typically to optimise the efficiency.

During deceleration, or a decrease in transmission ratio, the aforementioned sequence of clutch and synchromesh changes is reversed and the skilled person will understand that the unloaded synchromesh unit can engage the appropriate gear in anticipation of the next transmission stage change (down-shift).

In summary of the basic operation of the transmission shown in Figure 1, a power split transmission is provided in conjunction with a direct shift transmission to provide a continuous range of input-to-output speed ratios whilst also providing a purely hydrostatic mode which can be used to deliver maximum drawbar force at standstill. The DSG module 18 permits seamless changes in transmission stage so as not to interrupt the tractive force and place unnecessary loads on the transmission components as in known agricultural tractor transmission. In particular when under heavy loads such as during ploughing the transmission stage can be changed without stopping and/or interrupting the tractive force.

### Forward-reverse Module

Disposed at the front end of the transmission arrangement shown in Figure 1, forward-reverse module 12 permits all forward transmission ratios to also be available in reverse. The forward and reverse clutches 30, 48 are alternatively engageable (by associated hydraulic cylinders) to close the alternative torque transfer paths. In the forward range, forward clutch 30 is closed to provide a direct transmission of torque from driveshaft 22 to epicyclic input 38. In reverse mode, forward clutch 30 is opened and reverse clutch 48 is closed and torque is transferred via first gear set 32, 34, 36 and second gear set 42, 44. Due to one gear set including an odd number of gears and the second gear set comprising and even number of gears the direction of torque is reversed between driveshaft 22 and epicyclic first input 38.

Moreover, by providing a constant drive connection between the driveshaft 22 and the hydrostatic branch 16, forward and reverse drive ratios are available at low speeds when both the forward and reverse clutches 30, 48 are open. Furthermore, the placement of the forward reverse transmission module 12 upstream of the epicyclic module 14 allows the latter to be reversed for reverse gears. In other words, without the reversing of the first epicyclic input 38 the changing from hydrostatic transmission stage (Stage 1) in reverse mode to the (reverse) second transmission stage (Stage 2) would be non-trivial.

When operating in the hydrostatic mode, or first transmission stage, the forward and reverse clutches 30, 48 can be open. In these modes both forward and reverse at low drive ratio is available and can be sensed by an appropriate electronic control unit (ECU) in real time. In order to prepare for any required up-shift in transmission stage, the ECU may pre-empt such a change by selectively engaging forward clutch 30 or reverse clutch 48 depending on the sensed direction of movement, indicated by (X) in Figure 3. For example, in a situation in which the transmission is operating in the first transmission stage in the forward direction, the ECU may command closure of the forward clutch 30 to bring the input side of third clutch C3 up to speed before the commanded up-shift.

### Short Shifting

When under low load, determined by suitable pressure sensors in the hydrostatic power branch 16, the transmission 10 may operate in a 'short-shifting mode' wherein changes in transmission stage (as described above) are executed before the speed of the input and output sides of the incoming clutch are equalised. In other words, and with reference to Figure 2, the changes in transmission stage are commanded away from the intersection points of the lines shown.

In one example, an ECU, having determined that the transmission is under low load and a high acceleration is commanded, may execute the up-shifts in transmission stage when the swashplate angle is at +/- 50%. Advantageously, this avoids the need for the swashplate to reach maximum or minimum angle in order to up-shift.

The consequence is a transmission which behaves in a similar manner to known power-shift transmissions.

It should be understood that elements of the transmission illustrated in Figure 1 can be utilised in isolation, in combination with other transmission elements or arranged in a different order. For example, the direct shift transmission module 18 may instead be coupled to the front of another transmission module instead of direct connection to a differential gear as shown in Figure 1. Alternatively, the power split transmission provided by the forward-reverse module 12, epicyclic module 14, and hydrostatic power branch 16 may be replaced with a known power shift transmission having its outputs coupled to the direct shift transmission module 18.

In another arrangement not illustrated, the hydrostatic power branch 16 may be replaced with an electrostatic power branch comprising an electric generator and motor. Alternatively, the power branch may be replaced by a mechanical drive connection comprising one or more clutches as know in agricultural tractors in the VALTRA power shift range.

From reading the present disclosure, other modification will be apparent to persons skilled in the art. Such modifications may involve other features which are already known in the field of transmissions and component parts therefore and which may be used instead of or in addition to features already described herein.

## Claims

1. A vehicle transmission comprising first and second main torque transfer paths between a driven input (22) and a differential gear (24), each main torque transfer path respectively comprising an in-line clutch (C1,C2), a synchromesh unit (94,112) and a plurality of alternative torque transfer sub-paths being selectable by operation of the synchromesh unit, wherein the first main torque transfer path includes a continuously variable non-mechanical drive connection (16) and the second main torque transfer path includes a mechanical drive connection (14), **characterized by** the transmission further comprising first and second shafts (88,110), each of which is hollow and forms part of the first and second main torque transfer paths respectively, and a third shaft (90) which is in a direct driving relationship with the differential gear and passes through the first and second shafts, each of the first and second shafts being connectable to the third shaft via said plurality of alternative torque transfer sub-paths.

2. A transmission according to Claim 1, further comprising a fourth shaft (98) which is parallel to, and in driving engagement with, the third shaft (90), each synchromesh unit being associated with a respective one of the first and second shafts (88,110) and being moveable between a first position corresponding to a first torque transfer sub-path in which the associated first or second shaft is drivingly connected to the third shaft via the fourth shaft, a second position corresponding to a second torque transfer sub-path in which the associated first or second shaft is rendered integral with the third shaft, and a third position in which the associated first or second shaft is drivingly disconnected from the third shaft.

3. A transmission according to Claim 2, wherein the differential gear serves to deliver torque to a first pair of vehicle wheels, the transmission further comprising a four-wheel drive clutch (122) which is selectively engageable to drivingly connect the third shaft to a further differential gear that serves to deliver torque to a second pair of vehicle wheels.

4. A transmission according to any preceding claim, further comprising an epicyclic module (14) having first and second epicyclic inputs (38,54) and one epicyclic output (64,66), the first epicyclic input being connectable to said driven input, the non-mechanical drive connection being between the first and second epicyclic inputs, wherein the second main torque transfer path is via the epicyclic module.

5. A transmission according to Claim 4, wherein the epicyclic module comprises first and second epicyclic outputs (64,66), the second main torque transfer path being via the first epicyclic output, the transmission further comprising a third main torque transfer path between the driven input and the differential gear, via the second epicyclic output, the third torque transfer path comprising a respective in-line clutch (C3) and sharing the synchromesh unit and plurality of alternative torque transfer sub-paths with said first main torque transfer path.

6. A transmission according to Claim 5, wherein the epicyclic module comprises three compound planetary gear sets (52,60,62) supported on a planet carrier (54), each planetary gear set engaging respective sun gears (50,56,58), a first sun gear being integral with a first epicyclic input shaft forming the first epicyclic input, a second and a third sun gear being integral with respective epicyclic output shafts forming the first and second epicyclic outputs.

7. A transmission according to Claim 6, wherein the two epicyclic output shafts are mutually coaxial.

8. A transmission according to Claim 6 or 7, wherein the planet carrier forms said second epicyclic input.

9. A transmission according to any one of Claims 5 to 8, wherein the in-line clutches of both the first and third torque transfer paths alternatively engage a common shaft.

10. A transmission according to Claim 9 when dependent upon any one of Claims 1 to 3, wherein the in-line clutches of both the first and third torque transfer paths alternatively engage the first shaft.

11. A transmission according to any preceding claim, wherein said in-line clutches are disposed upstream of the associated synchromesh unit within the respective main torque transfer path.

12. A transmission according to any preceding claim, wherein said non-mechanical drive connection is hydrostatic and comprises a hydraulic pump and motor (68,70).

13. A transmission according to any one of Claims 1 to 11, wherein said non-mechanical drive connection is electrical and comprises an electric generator and motor.

14. A transmission according to any preceding claim, further comprising a forward-reverse transmission module (12) comprising an input shaft (22) coupled to said driven input, an output shaft (38), first and second reverser clutches (30,48) which are alternatively engageable to close respective forward and reverse drive paths between the input shaft and output shaft, wherein engagement of the first reverser clutch couples the input shaft directly to the output shaft, and engagement of the second reverser clutch couples the input shaft to the output shaft via first and second gear sets (32,34,36,42,44) which each comprise a plurality of meshed gears, one of said gear sets comprising an odd number of gears and the other of said gear sets comprising an even number of gears.

15. A transmission according to Claim 14 when dependent upon Claim 4, wherein the output shaft of the forward-reverse transmission module is integral with the first epicyclic input, wherein the first main torque transfer path is via said first gear set.

16. An agricultural tractor comprising a transmission according to any preceding claim.

17. A method of controlling a transmission according to any one of Claims 1 to 15, wherein each of said synchromesh units, the input-to-output speed ratio of said non-mechanical drive connection, and the in-line clutches are controllable by a control unit, the method comprising commanding selectively between a first mode in which torque is transferred via the first main torque transfer path, and a second mode in which torque is transferred via the second main torque transfer path, the in-line clutches of the first and second main torque transfer paths being alternately closed to select between the first and second modes.

## Patentansprüche

1. Fahrzeuggetriebe mit einem ersten Drehmomentübertragungs-Hauptpfad und einem zweiten Drehmomentübertragungs-Hauptpfad zwischen einem angetriebenen Eingang (22) und einem Differenzialgetriebe (24), wobei jeder der Drehmomentübertragungs-Hauptpfade eine In-Line-Kupplung (C1, C2), eine Synchrongetriebeeinheit (94, 112) und eine Mehrzahl alternativer Drehmomentübertragungs-Unterpfade, die durch den Betrieb der Synchrongetriebeeinheit auswählbar sind, aufweist, wobei der erste Drehmomentübertragungs-Hauptpfad eine kontinuierlich variable nichtmechanische Antriebsverbindung (16) und der zweite Drehmomentübertragungs-Hauptpfad eine mechanische Antriebsverbindung (14) aufweist, **dadurch gekennzeichnet,**
**dass** das Getriebe weiterhin eine erste Welle (88) und eine zweite Welle (110), die jeweils hohl ausgebildet sind und einen Teil des ersten bzw. zweiten Drehmomentübertragungs-Hauptpfads bilden, und eine dritte Welle (90) aufweist, die in einer direkten Antriebsbeziehung mit dem Differenzialgetriebe steht und sich durch die erste Welle und die zweite Welle erstreckt, wobei die erste Welle und zweite Welle jeweils über die Mehrzahl alternativer Drehmomentübertragungs-Unterpfade mit der dritten Welle verbindbar ist.

2. Getriebe nach Anspruch 1, weiterhin mit einer vierten Welle (98), die parallel zu der dritten Welle (90) angeordnet und antriebsmäßig mit dieser verbunden ist, wobei jede Synchrongetriebeeinheit der ersten Welle (88) oder der zweiten Welle (110) zugeordnet und zwischen
einer einem ersten Drehmomentübertragungs-Unterpfad entsprechenden ersten Position, in der die zugeordnete erste oder zweite Welle über die vierte Welle antriebsmäßig mit der dritten Welle verbunden ist,
einer einem zweiten Drehmomentübertragungs-Unterpfad entsprechenden zweiten Position, in der die zugeordnete erste oder zweite Welle mit der dritten Welle zusammengeschaltet wird (Englisches Original: *"rendered integral"*)*,* und
einer dritten Position, in der die zugeordnete erste oder zweite Welle antriebsmäßig von der dritten Welle getrennt ist,
bewegbar ist.

3. Getriebe nach Anspruch 2, wobei das Differenzialgetriebe zum Bereitstellen von Drehmoment an einem ersten Räderpaar des Fahrzeugs dient, wobei das Getriebe weiterhin eine Allradgetriebekupplung (122) aufweist, die wahlweise einrückbar ist, um die dritte Welle antriebsmäßig mit einem weiteren Differenzialgetriebe zu verbinden, das zum Bereitstellen von Drehmoment an einem zweiten Räderpaar des Fahrzeugs dient.

4. Getriebe nach einem der vorhergehenden Ansprüche, weiterhin mit einem Planetenmodul (14) mit einem ersten Planeteneingang (38) und einem zweiten Planeteneingang (54) und einem Planetenausgang (64, 66), wobei der erste Planeteneingang mit dem angetriebenen Eingang verbindbar ist, wobei die nichtmechanische Antriebsverbindung zwischen dem ersten Planeteneingang und dem zweiten Planeteneingang besteht, wobei der zweite Drehmomentübertragungs-Hauptpfad über die Planentenmodule verläuft.

5. Getriebe nach Anspruch 4, wobei das Planetenmodul einen ersten Planetenausgang (64) und einen zweiten Planetenausgang (66) aufweist, wobei der zweite Drehmomentübertragungs-Hauptpfad über den ersten Planetenausgang verläuft, wobei das Getriebe weiterhin einen dritten Drehmomentübertragungs-Hauptpfad zwischen dem angetriebenen Eingang und dem Differenzialgetriebe aufweist, wobei der Drehmomentübertragungs-Hauptpfad über den zweiten Planetenausgang verläuft, wobei der dritte Drehmomentübertragungspfad eine entsprechende In-Line-Kupplung (C3) aufweist und die Synchrongetriebeeinheit und die Mehrzahl alternativer Drehmomentübertragungs-Unterpfade mit dem ersten Drehmomentübertragungs-Hauptpfad teilt.

6. Getriebe nach Anspruch 5, wobei das Planetenmodul drei zusammengesetzte (Englisches Original: *"compound"*) Planetengetriebesätze (52, 60, 62) aufweist, die auf einem Planetenträger (54) gelagert sind, wobei jeder Planetengetriebesatz in entsprechende Sonnenräder (50, 56, 58) eingreift, wobei ein erstes Sonnenrad mit einer den ersten Planeteneingang bildenden ersten Planeteneingangswelle zusammengeschaltet (Englisches Original: *"integral"*) ist, wobei ein zweites Sonnenrad und ein drittes Sonnenrad mit entsprechenden Planetenausgangswellen zusammengeschaltet (Englisches Original: *"integral"*) ist, die den ersten Planetenausgang und den zweiten Planetenausgang bilden.

7. Getriebe nach Anspruch 6, wobei die zwei Planetenausgangswellen koaxial zueinander verlaufen.

8. Getriebe nach Anspruch 6 oder 7, wobei der Planetenträger den zweiten Planeteneingang bildet.

9. Getriebe nach einem der Ansprüche 5 bis 8, wobei die In-Line-Kupplungen des ersten Drehmomentübertragungspfads und des zweiten Drehmomentübertragungspfads abwechselnd an einer gemeinsamen Welle angreifen.

10. Getriebe nach Anspruch 9, dieser wiederum nach einem der Ansprüche 1 bis 3, wobei die In-Line-Kupplungen des ersten Drehmomentübertragungspfads und des zweiten Drehmomentübertragungspfads abwechselnd an der ersten Welle angreifen.

11. Getriebe nach einem der vorhergehenden Ansprüche, wobei die In-Line-Kupplungen in dem entsprechenden Drehmomentübertragungs-Hauptpfad stromaufwärts der zugeordneten Synchrongetriebeeinheit angeordnet sind.

12. Getriebe nach einem der vorhergehenden Ansprüche, wobei die nichtmechanische Antriebsverbindung hydrostatisch ist und eine Hydraulikpumpe und einen Motor (68, 70) aufweist.

13. Getriebe nach einem der Ansprüche 1 bis 11, wobei die nichtmechanische Antriebsverbindung elektrisch ist und einen elektrischen Generator und einen Motor aufweist.

14. Getriebe nach einem der vorhergehenden Ansprüche, weiterhin mit einem Vorwärts-Rückwärts-Getriebemodul (12) mit einer mit dem angetriebenen Eingang verbundenen Eingangswelle (22), einer Ausgangswelle (38), einer ersten Umkehrkupplung (30) und einer zweiten Umkehrkupplung (48), die abwechselnd in Eingriff bringbar sind, um einen entsprechenden Vorwärts-Antriebspfad bzw. einen entsprechenden Rückwärts-Antriebspfad zwischen der Eingangswelle und der Ausgangswelle zu schließen, wobei der Eingriff der ersten Umkehrkupplung die Eingangswelle direkt mit der Ausgangswelle verbindet, und wobei der Eingriff der zweiten Umkehrkupplung die Eingangswelle über einen ersten und einen zweiten Zahnradsatz (32, 34, 36, 42, 44) mit der Ausgangswelle verbindet, wobei jeder Satz eine Mehrzahl von Zahnrädern aufweist, wobei einer der Zahnradsätze eine ungerade Anzahl von Zahnrädern und der andere Zahnradsatz eine gerade Anzahl von Zahnrädern aufweist.

15. Getriebe nach Anspruch 14, dieser wiederum nach Anspruch 4, wobei die Ausgangswelle des Vorwärts-Rückwärts-Getriebemoduls zusammengeschaltet (Englisches Original: *"integral"*) mit dem ersten Planeteneingang ausgebildet ist, wobei der erste Drehmomentübertragungs-Hauptpfad über den ersten Zahnradsatz verläuft.

16. Landwirtschaftlicher Traktor mit einem Getriebe nach den vorangehenden Ansprüchen.

17. Verfahren zum Regeln eines Getriebes nach einem der Ansprüche 1 bis 15, wobei jede der Synchrongetriebeeinheiten, das Eingang/Ausgang-Geschwindigkeitsverhältnis der nichtmechanischen Antriebsverbindung und die In-Line-Kupplungen durch eine Regeleinheit regelbar sind, wobei das Verfahren das wahlweise Befehlen (Englisches Original: *"commanding"*) zwischen
einem ersten Modus, in dem Drehmoment über den ersten Drehmomentübertragungs-Hauptpfad übertragen wird, und
einem zweiten Modus, in dem Drehmoment über den zweiten Drehmomentübertragungs-Hauptpfad übertragen wird,
aufweist, wobei die In-Line-Kupplungen des ersten Drehmomentübertragungs-Hauptpfads und des zweiten Drehmomentübertragungs-Hauptpfads abwechselnd geschlossen werden, um zwischen dem ersten Modus und dem zweiten Modus auszuwählen.

## Revendications

1. Transmission de véhicule comprenant des premier et deuxième circuits de transfert de couple principaux entre une entrée entraînée (22) et un engrenage différentiel (24), chaque circuit de transfert de couple principal comprenant respectivement un embrayage en ligne (C1, C2), une unité synchrone (94, 112) et une pluralité de variantes de circuits secondaires de transfert de couple pouvant être sélectionnés par la commande de l'unité synchrone, dans laquelle le premier circuit de transfert de couple principal comporte une liaison d'entraînement non mécanique à variation continue (16) et le deuxième circuit de transfert de couple principal comporte une liaison d'entraînement mécanique (14), **caractérisée par le fait que** la transmission comprend en outre des premier et deuxième arbres (88, 110), chacun d'eux est creux et forme respectivement une partie des premier et deuxième circuits de transfert de couple principaux, et un troisième arbre (90) qui est en relation d'entraînement direct avec l'engrenage différentiel et passe à travers les premier et deuxième arbres, chacun des premier et deuxième arbres pouvant être couplés au troisième arbre par l'intermédiaire de ladite pluralité de circuits secondaires de transfert de couple alternatifs.

2. Transmission selon la revendication 1, comprenant en outre un quatrième arbre (98) qui est parallèle au troisième arbre (90) et en relation d'entraînement avec celui-ci, chaque unité synchrone étant associée à l'un respectif desdits premier et deuxième arbres (88, 110) et pouvant être déplacée entre une première position correspondant à un premier circuit secondaire de transfert de couple dans lequel le premier ou deuxième arbre associé est couplé avec possibilité d'entraînement au troisième arbre par l'intermédiaire du quatrième arbre, une deuxième position correspondant à un deuxième circuit secondaire de transfert de couple dans laquelle le premier ou deuxième arbre associé est rendu solidaire du troisième arbre, et une troisième position dans laquelle le premier ou deuxième arbre associé est découplé de l'entraînement par rapport au troisième axe.

3. Transmission selon la revendication 2, dans laquelle l'engrenage différentiel sert à délivrer un couple à une première paire de roues de véhicule, la transmission comprenant en outre un embrayage pour quatre roues motrices (122) qui peut être activé de manière sélective afin de coupler avec possibilité d'entraînement le troisième arbre à un autre engrenage différentiel qui sert à délivrer un couple à une seconde paire de roues de véhicule.

4. Transmission selon l'une quelconque des revendications précédentes, comprenant en outre un module épicycloïdal (14) comportant des première et seconde entrées épicycloïdales (38, 54) et une sortie épicycloïdale (64, 66), la première entrée épicycloïdale pouvant être couplée à ladite entrée entraînée, la liaison d'entraînement non mécanique étant située entre les première et seconde entrées épicycloïdales, dans laquelle le deuxième circuit de transfert de couple principal passe par l'intermédiaire du module épicycloïdal.

5. Transmission selon la revendication 4, dans laquelle le module épicycloïdal comprend des première et seconde sorties épicycloïdales (64, 66), le deuxième circuit de transfert de couple principal passant par l'intermédiaire de la première sortie épicycloïdale, la transmission comprenant en outre un troisième circuit de transfert de couple principal entre l'entrée entraînée et l'engrenage différentiel, par l'intermédiaire de la seconde sortie épicycloïdale, le troisième circuit de transfert de couple comprenant un embrayage en ligne (C3) respectif et partageant l'unité synchrone et une pluralité de variantes de circuits secondaires de transfert de couple avec ledit premier circuit de transfert de couple principal.

6. Transmission selon la revendication 5, dans laquelle le module épicycloïdal comprend trois jeux d'engrenage satellites composés (52, 60, 62) supportés par un porte-satellite (54), chaque jeu d'engrenage satellite engrenant avec des engrenages solaires respectifs (50, 56, 58), un premier engrenage solaire étant solidaire d'un premier arbre d'entrée épicycloïdal formant la première entrée épicycloïdale, un deuxième et un troisième engrenages solaires étant solidaires des arbres de sortie épicycloïdaux respectifs formant les première et seconde sorties épicycloïdales.

7. Transmission selon la revendication 6, dans laquelle les deux arbres de sortie épicycloïdaux sont mutuellement coaxiaux.

8. Transmission selon la revendication 6 ou 7, dans laquelle le porte-satellite forme ladite seconde entrée épicycloïdale.

9. Transmission selon l'une quelconque des revendications 5 à 8, dans laquelle les embrayages en ligne à la fois des premier et troisième circuits de transfert de couple sont couplés en alternance à un arbre commun.

10. Transmission selon la revendication 9, lorsqu'elle dépend de l'une quelconque des revendications 1 à 3, dans laquelle les embrayages en ligne à la fois des premier et troisième circuits de transfert de couple sont couplés en alternance au premier arbre.

11. Transmission selon l'une quelconque des revendications précédentes, dans laquelle lesdits embrayages en ligne sont disposés en amont de l'unité synchrone associée à l'intérieur du circuit de transfert de couple principal respectif.

12. Transmission selon l'une quelconque des revendications précédentes, dans laquelle ladite liaison d'entraînement non mécanique est hydrostatique et comprend une pompe et un moteur hydrauliques (68, 70).

13. Transmission selon l'une quelconque des revendications 1 à 11, dans laquelle ladite liaison d'entraînement non mécanique est électrique et comprend un générateur et un moteur électriques.

14. Transmission selon l'une quelconque des revendications précédentes, comprenant en outre un module de transmission de marche avant-arrière (12) comprenant un arbre d'entrée (22) couplé à ladite entrée entraînée, un arbre de sortie (38), des premier et deuxième embrayages de marche arrière (30, 48) qui peuvent être activés en alternance afin de fermer des circuits d'entraînement avant et arrière respectifs entre l'arbre d'entrée et l'arbre de sortie, dans laquelle l'activation du premier embrayage arrière couple l'arbre d'entrée directement à l'arbre de sortie, et l'activation du second embrayage arrière couple l'arbre d'entrée à l'arbre de sortie par l'intermédiaire des premier et second jeux d'engrenage (32, 34, 36, 42, 44) qui comprennent chacun une pluralité d'engrenages en prise, l'un desdits jeux d'engrenages comprenant un nombre impair d'engrenages et l'autre desdits jeux d'engrenages comprenant un nombre pair d'engrenages.

15. Transmission selon la revendication 14, lorsqu'elle dépend de la revendication 4, dans laquelle l'arbre de sortie du module de transmission de marche avant-arrière est solidaire de la première entrée épicycloïdale, dans laquelle le premier circuit de transfert de couple principal passe par l'intermédiaire dudit premier jeu d'engrenage.

16. Tracteur agricole comprenant une transmission selon l'une quelconque des revendications précédentes.

17. Procédé de commande d'une transmission selon l'une quelconque des revendications 1 à 15, dans lequel chacune desdites unités synchrones, le rapport de vitesse d'entrée sur sortie de ladite liaison d'entraînement non mécanique et les embrayages en ligne peuvent être commandés par une unité de commande, le procédé comprenant la commande de manière sélective entre un premier mode dans lequel un couple est transféré par l'intermédiaire du premier circuit de transfert de couple principal, et un second mode dans lequel le couple est transféré par l'intermédiaire du deuxième circuit de transfert de couple principal, les embrayages en ligne des premier et deuxième circuits de transfert de couple principaux étant désactivés en alternance afin d'assurer la sélection entre les premier et second modes.
